# EUROPÄISCHE PATENTANMELDUNG

(11) **EP 1 496 279 A1**
(43) Veröffentlichungstag der Anmeldung: **12.01.2005**
(21) Anmeldenummer: 04015472.6
(22) Anmeldetag: 01.07.2004
(51) Int. Cl.: F16D 13/75

(54) **Druckplattenbaugruppe**

(30) Priorität: 09.07.2003 DE 10330880
(71) Anmelder: ZF Sachs AG, 97424 Schweinfurt (DE)
(72) Erfinder: Weidinger, Reinhold, 97509 Kolitzheim (DE)

(57) **Zusammenfassung**

Eine Druckplattenbaugruppe, umfassend ein Gehäuse (12), eine in dem Gehäuse (12) angeordnete und durch eine Kopplungsanordnung (16) mit diesem zur gemeinsamen Drehung um eine Drehachse (A), in Richtung der Drehachse (A) bewegbar gekoppelte Anpressplatte (14), eine bezüglich des Gehäuses (12) und der Anpressplatte (14) abgestützte Kraftbeaufschlagungsanordnung (28), durch welche die Anpressplatte (14) zur Erlangung eines Einrückzustandes beaufschlagbar ist, eine Verschleißnachstellvorrichtung (34) mit wenigstens einem Nachstellelement (36), das zur Durchführung eines Nachstellvorgangs unter der Vorspannung einer Vorspannanordnung (46) steht, ist dadurch gekennzeichnet, dass eine Blockieranordnung (68) vorgesehen ist, welche auf das Nachstellelement (36) einwirken kann, wobei die Blockieranordnung (68) das Nachstellelement in Abhängigkeit von einer Fliehkrafteinwirkung zur Durchführung eines Nachstellvorgangs freigibt oder eine Nachstellbewegung des Nachstellelements (36) auf ein vorbestimmtes Ausmaß beschränkt oder vollständig unterbindet.

## Beschreibung

Die vorliegende Erfindung betrifft eine Druckplattenbaugruppe gemäß dem Oberbegriff des Anspruchs 1.

Eine derartige in einer Reibungskupplung für ein Kraftfahrzeug eingesetzte Druckplattenbaugruppe ist aus der DE 29 20 932 A1 bekannt. Bei dieser bekannten Druckplattenbaugruppe umfasst die Verschleißnachstellvorrichtung ein ringartiges Nachstellelement, das unter Federvorspannung steht und zur Drehung in Umfangsrichtung vorgespannt ist. An dem Nachstellelement einerseits und der Anpressplatte andererseits sind jeweils komplementäre Rampenflächen vorgesehen, so dass durch Drehung des Nachstellelements dieses mit seinen Rampenflächen an den komplementären Rampenflächen der Anpressplatte abgleitet und somit ein an dem Nachstellelement gebildeter Auflagebereich für einen Kraftspeicher sich axial bezüglich der Anpressplatte verlagert. Auf diese Art und Weise kann im Betrieb aufgetretener Verschleiß kompensiert werden, wenn bei Durchführung eines Ausrückvorgangs die Anpressplatte zunächst der Ausrückbewegung des Kraftspeichers unter der Wirkung einer Lüftkrafterzeugungsanordnung folgt und dann bei Wirksamwerden einer Lüftwegbegrenzungsanordnung stehen bleibt und somit der Kraftspeicher seine Beaufschlagungseinwirkung aufgrund einer weiter anhaltenden Ausrückbewegung desselben aufhebt. Die Verschleißnachstellung dauert so lange an, bis das Nachstellelement wieder an dem in einer Ausrückstellung gehaltenen Kraftspeicher zur Anlage kommt.

Derartige vor allem auch in Nutzkraftfahrzeugen eingesetzte Druckplattenbaugruppen führen im Betrieb zu dem Problem, dass dann, wenn bei Durchführung von Ausrückvorgängen die Anpressplatte zumindest zeitweise durch die Lüftkrafterzeugungsanordnung gegen den Kraftspeicher vorgespannt ist, durch Stöße die Anpressplatte eine Axialbewegung erfahren kann, die diese entgegen der Krafteinwirkung der Lüftkrafterzeugungsanordnung in Richtung vom Kraftspeicher weg bewegt. Dies kann beispielsweise auftreten, wenn ein Nutzkraftfahrzeug beim Rückwärtsfahren gegen eine Laderampe stößt. Die Folge davon ist, dass durch das kurzzeitige Aufheben der Einspannwirkung in der Druckplattenbaugruppe eine ungewünschte Verschleißnachstellung auftreten kann, die dazu führt, dass der Kraftspeicher nachfolgend eine mehr oder weniger undefinierte Einbaulage einnimmt.

Es ist die Aufgabe der vorliegenden Erfindung, eine gattungsgemäße Druckplattenbaugruppe so weiterzubilden, dass die Gefahr ungeeigneter Nachstellvorgänge vermieden wird.

Erfindungsgemäß wird diese Aufgabe gelöst durch eine Druckplattenbaugruppe, umfassend ein Gehäuse, eine in dem Gehäuse angeordnete und durch eine Kopplungsanordnung mit diesem zur gemeinsamen Drehung um eine Drehachse, in Richtung der Drehachse bewegbar gekoppelte Anpressplatte, eine bezüglich des Gehäuses und der Anpressplatte abgestützte Kraftbeaufschlagungsanordnung, durch welche die Anpressplatte zur Erlangung eines Einrückzustandes beaufschlagbar ist, eine Verschleißnachstellvorrichtung mit wenigstens einem Nachstellelement, das zur Durchführung eines Nachstellvorgangs unter der Vorspannung einer Vorspannanordnung steht.

Dabei ist dann weiter eine Blockieranordnung vorgesehen, welche auf das Nachstellelement einwirken kann, wobei die Blockieranordnung das Nachstellelement in Abhängigkeit von einer Fliehkrafteinwirkung zur Durchführung eines Nachstellvorgangs freigibt oder eine Nachstellbewegung des Nachstellelements auf ein vorbestimmtes Ausmaß beschränkt oder vollständig unterbindet.

Durch die erfindungsgemäß vorzusehende Blockieranordnung wird erreicht, dass eine Nachstellbewegung in der Druckplattenbaugruppe nur in definierten fliehkraftabhängigen Zuständen erfolgen kann. Insbesondere kann dabei vorgesehen sein, dass dann, wenn eine auf die Blockieranordnung bei Drehung der Druckplattenbaugruppe einwirkende Fliehkraft eine vorbestimmte Größe übersteigt, die Blockieranordnung das Nachstellelement gegen Durchführung eines Nachstellvorgangs im Wesentlichen blockiert oder dem Nachstellelement eine Nachstellbewegung in dem vorbestimmten Ausmaß ermöglicht. Es wird somit also erreicht, dass beispielsweise nur dann, wenn das Fahrzeug im Stillstand ist und die Druckplattenbaugruppe sich nicht dreht und somit auch das Auftreten von Stößen o.dgl. nicht zu erwarten ist, die Verschleißnachstellvorrichtung bzw. das wenigstens eine Verschleißnachstellelement derselben grundsätzlich zur Durchführung eines Nachstellvorgangs freigegeben ist, wenn in diesem Zustand die Kupplung in Richtung Ausrücken verstellt wird. Alternativ ist es bei der erfindungsgemäßen Druckplattenbaugruppe möglich, durch das Vorsehen der Blockieranordnung die in undefinierten Zuständen, also beispielsweise Oszillationszuständen, der Anpressplatte möglicherweise auftretenden Nachstellvorgänge auf ein definiertes Ausmaß zu begrenzen, so dass auch weiterhin die Einbaulage der Kraftbeaufschlagungsanordnung ebenfalls definiert bleibt.

Beispielsweise kann vorgesehen sein, dass die Blockieranordnung wenigstens ein Blockierelement umfasst, das durch Fliehkrafteinwirkung in Blockierwechselwirkung mit dem Nachstellelement bringbar ist und durch Rückstellkrafteinwirkung außer Blockierwechselwirkung mit dem Nachstellelement bringbar ist. Um in definierter Art und Weise die Verstellung in Richtung deaktivierte, also nicht blockierende Stellung zu erlangen, wird vorgeschlagen, dass die Rückstellkrafteinwirkung durch eine auf das Blockierelement einwirkende Rückstellfeder bereitgestellt ist. Alternativ oder zusätzlich ist es auch möglich, dass die Rückstellkrafteinwirkung durch Schwerkrafteinwirkung bereitgestellt ist.

Zur Erlangung eines sicheren, stabilen Blockierzustandes wird vorgeschlagen, dass an dem Nachstellelement oder dem wenigstens einen Blockierelement eine in einer Nachstellrichtung des Nachstellelements sich erstreckende Verzahnungsformation vorgesehen ist, mit welcher das jeweils andere Element zur Herstellung des Blockierzustandes gegebenenfalls nach Bewegung des Nachstellelements in der Nachstellrichtung in Blockiereingriff bringbar ist.

Bei der erfindungsgemäßen Druckplattenbaugruppe kann zum definierten Bewegen der Anpressplatte in Richtung Auskuppeln eine Lüftwegbegrenzungsanordnung vorgesehen sein, durch welche bei Durchführung eines Ausrückvorgangs eine Lüftbewegung der Anpressplatte begrenzbar ist, wobei die Lüftwegbegrenzungsanordnung für die Anpressplatte einen von einem Verschleißzustand im Wesentlichen unabhängigen Lüftweg zulässt. Beispielsweise ist es möglich, dass die Lüftwegbegrenzungsanordnung ein an dem Gehäuse getragenes und durch Krafteinwirkung bezüglich des Gehäuses verlagerbares Anschlagelement sowie ein mit der Anpressplatte fest gekoppeltes und bei Auftreten von Verschleiß das Anschlagelement bezüglich des Gehäuses verlagerndes Mitnahmeelement aufweist.

Um diese definierte und begrenzte Lüftbewegung der Anpressplatte erlangen zu können, wird vorgeschlagen, dass eine Lüftkrafterzeugungsanordnung vorgesehen ist, durch welche die Anpressplatte mit einer der Beaufschlagungswirkung der Kraftbeaufschlagungsanordnung entgegen wirkenden Lüftkraft beaufschlagt ist. Bei einer besonders einfach zu realisierenden Ausgestaltungsform kann vorgesehen sein, dass die Kopplungsanordnung die Lüftkrafterzeugungsanordnung bildet.

Um auch in einem Übergangszustand zwischen einer vollkommen eingerückten Lage und einer vorkommen ausgerückten Lage der Anpressplatte undefinierte Nachstellungen verhindern zu können, wird vorgeschlagen, dass die durch die Vorspannanordnung bereitgestellte Vorspannwirkung nicht ausreicht, um das Nachstellelement bei vorhandener Lüftkrafteinwirkung und Beaufschlagungswirkung durch die Kraftbeaufschlagungsanordnung zur Durchführung eines Nachstellvorgangs zu bewegen.

Weiter ist es zum Vorgeben definierter Nachstellvorgänge bei Auftreten von Verschleiß vorteilhaft, wenn eine Ausrückwegbegrenzungsanordnung für die Kraftbeaufschlagungsanordnung vorgesehen ist zum Begrenzen von deren Bewegung bei Durchführung eines Ausrückvorgangs. Dabei kann beispielsweise bei einer besonders einfach zu realisierenden Ausgestaltungsform vorgesehen sein, dass die Ausrückwegbegrenzungsanordnung durch das Gehäuse gebildet ist.

Die vorliegende Erfindung wird nachfolgend mit Bezug auf die beiliegenden Figuren detailliert beschrieben. Es zeigt:
- Fig. 1: eine Teil-Axialansicht einer erfindungsgemäßen Druckplattenbaugruppe;
- Fig. 2: eine Schnittansicht der in Fig. 1 gezeigten Druckplattenbaugruppe längs einer Linie II-II;
- Fig. 3: eine Teil-Schnittansicht der Druckplattenbaugruppe der Fig. 1 längs einer Linie III-III;
- Fig. 4: das im Kreis IV der Fig. 3 erkennbare Detail vergrößert;
- Fig. 5: eine Teil-Radialansicht der in Fig. 1 gezeigten Druckplattenbaugruppe in Blickrichtung V;
- Fig. 6: eine Teil-Axialansicht der in der Druckplattenbaugruppe der Fig. 1 eingesetzten Anpressplatte mit Verschleißnachstellvorrichtung;
- Fig. 7: eine Schnittansicht der in Fig. 6 gezeigten Anpressplatte längs einer Linie VII-VII;
- Fig. 8: eine der Fig. 6 entsprechende Darstellung einer alternativen Ausgestaltungsform;
- Fig. 9: die Anpressplatte der Fig. 8, geschnitten längs einer Linie IX-IX;
- Fig. 10: die Anpressplatte der Fig. 8, geschnitten längs einer Linie X-X.

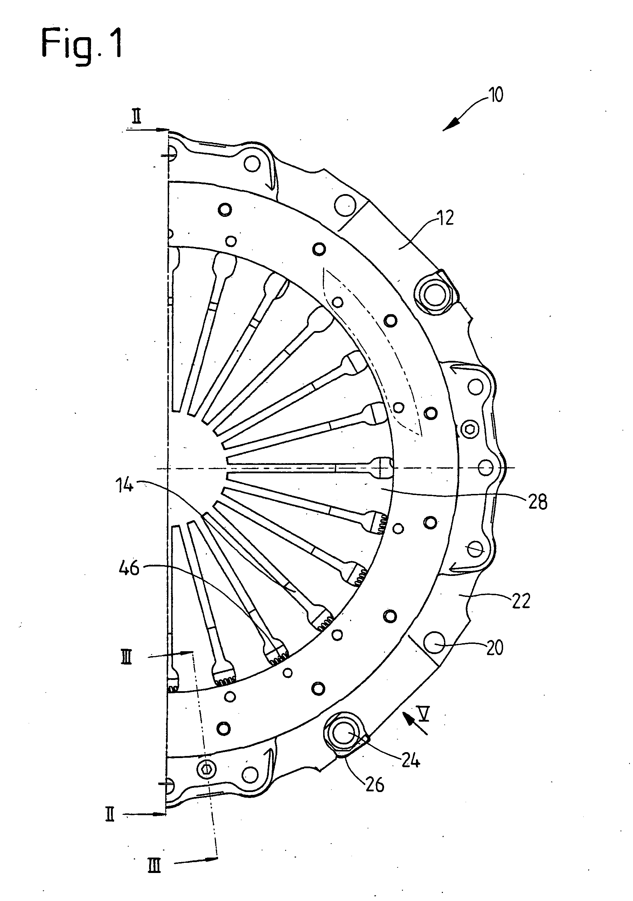

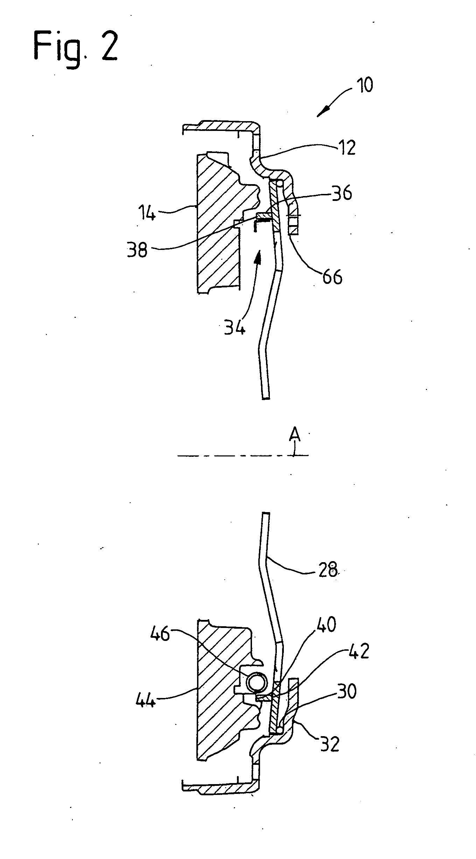

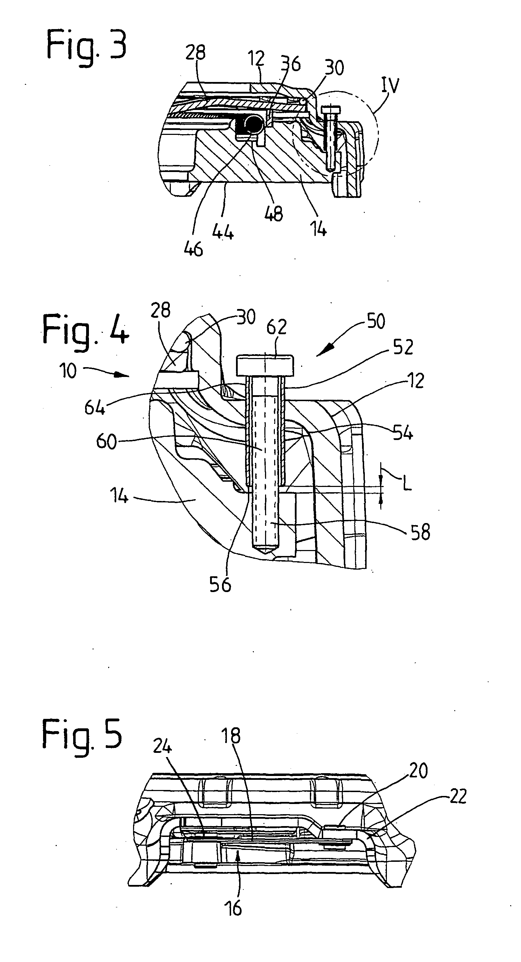

Die in den Fig. 1 und 2 mit ihren wesentlichen Komponenten dargestellte Druckplattenbaugruppe 10 umfasst ein im Wesentlichen topfartiges Gehäuse 12, das zur festen Verbindung mit einer Schwungmassenanordnung ausgebildet ist. In diesem topfartigen Gehäuse 12 ist eine Anpressplatte 14 vorgesehen, die zusammen mit dem Gehäuse 12 um eine Drehachse A drehbar ist, in beschränktem Ausmaß jedoch bezüglich des Gehäuses 12 in Richtung der Drehachse A bewegbar ist. Um diese Kopplungswirkung zwischen dem Gehäuse 12 und der Anpressplatte 14 erlangen zu können, kann eine in Fig. 5 erkennbare Kopplungsanordnung 16 vorgesehen sein. Diese kann in Umfangsrichtung um die Drehachse verteilt mehrere Tangentialblattfedern 18 o.dgl. umfassen, welche in einem Umfangsendbereich durch einen Nietbolzen 20 an einem nach radial außen greifenden flanschartigen Abschnitt 22 des Gehäuses 12 festgelegt sind und in ihrem anderen Umfangsendbereich durch Nietbolzen 24 an nach radial außen greifenden Armabschnitten 26 der Anpressplatte 14 festgelegt sind. Durch diese Tangentialblattfedern 18 bzw. die dadurch bereitgestellte Kopplungsanordnung 16 kann gleichzeitig auch eine Lüftkrafterzeugungsfunktion realisiert werden, die die Anpressplatte 14 in Richtung Auskuppeln, also in der Darstellung der Fig. 2 nach rechts und in Richtung von der nicht dargestellten Schwungmassenanordnung weg, vorspannt.

Um die Anpressplatte 14 in Richtung Einkuppeln bewegen zu können, ist eine Kraftbeaufschlagungsanordnung in Form eines Kraftspeichers 28, beispielsweise nach Art einer Membranfeder aufgebaut, vorgesehen. Im dargestellten Beispiel stützt sich dieser Kraftspeicher 28 in seinem radial äußersten Bereich über einen Drahtring 30 o.dgl. an einem Bodenbereich 32 des Gehäuses 12 ab. In seinem radial innersten Bereich kann an dem Kraftspeicher 28 zur Durchführung von Ausrückvorgängen ziehend angegriffen werden. Zwischen diesen radial außen bzw. innen liegenden Bereichen beaufschlagt der Kraftspeicher 28 über eine Verschleißnachstellvorrichtung 34 die Anpressplatte 14, um diese entgegen der Lüftkraft, welche durch die Kopplungsanordnung 16 bereitgestellt ist und welche deutlich kleiner ist als die vom Kraftspeicher 28 bereitgestellte Einrückkraft, in Richtung Einrücken, also in der Darstellung der Fig. 2 nach links, zu beaufschlagen.

Die Verschleißnachstellvorrichtung 34 umfasst im dargestellten Beispiel einen Nachstellring 36. An seiner von der Anpressplatte 14 abgewandten Seite wird der Nachstellring 36 durch den Kraftspeicher 28 beaufschlagt. An seiner der Anpressplatte 14 zugewandten Seite weist der Nachstellring 36 in Umfangsrichtung aufeinander folgend mehrere Rampenflächen 38 auf, welchen komplementäre Rampenflächen 40 an der Anpressplatte 14 gegenüber liegen. Durch Drehung des Nachstellrings 36 bezüglich der Anpressplatte 14 in einer Nachstellrichtung um die Drehachse A gleiten die Rampenflächen 38, 40 aneinander ab, was zur Folge hat, dass der am Nachstellring gebildete Auflagebereich 42 für den Kraftspeicher 28 sich axial bezüglich der Anpressplatte 18 verlagert, und zwar so, dass der Abstand zu einer an der Anpressplatte 14 vorgesehenen Reibfläche 44 zunimmt. Um diese Drehung in der Nachstellrichtung bewirken zu können, ist zumindest eine Vorspannfeder 46 vorgesehen, die am Nachstellring 36 einerseits und der Anpressplatte 14 andererseits angreift und durch ihre Federkraft den Nachstellring zur Drehung vorspannt. Diese Feder 46 kann beispielsweise als Schraubenzugfeder ausgebildet sein, die zur Erlangung einer Umfangsorientierung derselben in einer Vertiefung 48 in der Anpressplatte 14 aufgenommen sein kann.

Der Anpressplatte 14 ist weiterhin eine allgemein mit 50 bezeichnete Lüftwegbegrenzungsanordnung zugeordnet. Diese umfasst an zumindest einer Umfangspositionierung am Gehäuse 12 ein hülsenartig ausgebildetes Anschlagelement 52, das mit seiner Hülsenlängsachse im Wesentlichen parallel zur Drehachse A und somit in der Verschieberichtung der Anpressplatte 14 ausgerichtet in einer Öffnung 54 des Gehäuses 12 getragen ist. Der Außendurchmesser dieses hülsenartigen Anschlagelements 52 und der Innendurchmesser der Öffnung 54 sind so aufeinander abgestimmt, dass das Anschlagelement 52 reibkraftschlüssig am Gehäuse 12 gehalten ist und durch definierte Krafteinwirkung bezüglich des Gehäuses 12 in Richtung der Drehachse A verschoben werden kann. Hierzu ist es beispielsweise möglich, das hülsenartige Anschlagelement 52 aus nach radial außen sich aufspreizendem Blech- oder Federstahlmaterial auszugestalten, das an einem Umfangsbereich axial offen ist und somit eine Aufspreizung zulässt. Auch der Einsatz eines bezüglich des Innendurchmessers der Öffnung 54 geringfügig überdimensionierten röhrenartigen Kunststoffelements o.dgl. ist grundsätzlich möglich. Mit seinem in dem Gehäuse 12 liegenden axialen Endbereich 56 bildet das Anschlagelement 52 einen Axialanschlag für die Anpressplatte 14 bei Bewegung derselben in Richtung Ausrücken, so dass eine weitere Bewegung der Anpressplatte 14 in dieser Richtung nicht möglich ist. Hier ist für die Reibwechselwirkung zwischen dem Anschlagelement 52 und dem Gehäuse 12 darauf zu achten, dass die durch die Kopplungsanordnung 16 oder eine sonstige Lüftkrafterzeugungsanordnung bereitgetellte Lüftkraft nicht dazu ausreicht, das Anschlagelement 52 oder ggf. mehrere davon bezüglich des Gehäuses 12 zu verschieben.

Die Lüftwegbegrenzungsanordnung 50 umfasst ferner ein beispielsweise als Schraubbolzen ausgebildetes Mitnahmeelement 58. Dieses durchsetzt mit seinem Schaftbereich 60 das hülsenartig ausgebildete Anschlagelement 52 und ist durch Einschrauben, Einpressen, Einkleben o.dgl. an der Anpressplatte 14 festgelegt. Mit seinem außerhalb des Gehäuses 12 und auch des Anschlagelements 52 liegenden Kopfbereich 62 hintergreift das Mitnahmeelement 58 das Anschlagelement 52 an seinem außerhalb des Gehäuses 12 liegenden Endbereich 64. Die Abmessung des Anschlagelements 52 und des zwischen der Anpressplatte und dem Kopfbereich 52 liegenden Abschnitts des Schafts 60 des Mitnahmeelements 58 sind so aufeinander abgestimmt, dass das Mitnahmeelement 58 und somit auch die Anpressplatte 14 bezüglich des Anschlagelements 52 eine Axialbewegung im Ausmaß des maximalen Lüftspiels L durchführen können.

In Fig. 4 ist beispielsweise der vollkommen eingerückte Zustand der Anpressplatte 14 bzw. der Druckplattenbaugruppe 10 gezeigt, in welcher die Anpressplatte 14 den maximalen Abstand L zum Endbereich 56 des Anschlagelements 52 aufweist, während der Kopfbereich 62 des Mitnahmeelements 58 am Endbereich 64 aufliegt. Soll ausgehend von diesem Zustand in den Ausrückzustand übergegangen werden, so wird am Kraftspeicher 28 radial innen ziehend, also diesen radial innen von der Schwungmassenanordnung weg bewegend angegriffen, so dass die Anpressplatte 14 unter der Einwirkung der Kopplungsanordnung 16 sich nunmehr der Bewegung des Kraftspeichers 28 in Richtung Ausrücken folgend axial verlagert. Dabei hebt der Kopfbereich 62 vom Endbereich 64 des Anschlagelements 52 ab, während die Anpressplatte 14 sich dem Endbereich 56 annähert und bei Erreichen desselben an einer weiteren axialen Bewegung gehindert ist.

Auch für den Kraftspeicher 28 ist ein Ausrückbewegungsanschlag 66 am Gehäuse 12 vorgesehen. Die Bewegung des Kraftspeichers kann auch durch Anschlagen des Betätigungssystems begrenzt werden, beispielsweise durch Anschlagen eines Ausrückers an einer Wandung des Getriebes. Auch durch Zwischenschalten von zusätzlichen Elementen, beispielsweise zwischen den Kraftspeicher und das Gehäuse, ist eine Begrenzung des Federwegs des Kraftspeichers zu erreichen. Durch ziehendes Angreifen am radial inneren Endbereich des Kraftspeichers 28 nähert sich dieser dem Ausrückbewegungsanschlag 66 an, bis er bei Inanlagetreten an diesem nicht weiterbewegt werden kann. Im Neuzustand bzw. nicht verschleißbehafteten oder verschleißkompensierten Zustand tritt dieses Inanlagetreten des Kraftspeichers 28 am Ausrückbewegungsanschlag 66 genau dann auf, wenn die Anpressplatte 14 in Kontakt mit dem Endbereich 56 des Anschlagelements 52 tritt. Dies heißt, dass die Anpressplatte 14 und der Kraftspeicher 28 dann etwa zum gleichen Zeitpunkt an einer weiteren Bewegung in Richtung Ausrücken gehindert sind. Auf diese Art und Weise ist dafür gesorgt, dass die Verschleißnachstellvorrichtung 34 bzw. der Nachstellring 36 desselben weiterhin durch die Krafteinwirkung der Tangentialblattfedern 18 definiert zwischen dem Kraftspeicher 28 und der Anpressplatte 14 gehalten wird, da die durch diese Tangentialblattfedern 18 bereitgestellte Lüftkraft so groß ist, dass die durch die Vorspannfeder 28 bereitgestellte Vorspannkraft, welche auf den Nachstellring 36 einwirkt, diesen nicht zur Bewegung in der Nachstellrichtung verdrehen kann.

Tritt bei einer Reibungskupplung mit einer derartigen Druckplattenbaugruppe 10 nunmehr ein Verschleiß beispielsweise der Reibbeläge einer nicht dargestellten Kupplungsscheibe auf, so bewegt sich beispielsweise bei Durchführung eines Einrückvorgnags die Anpressplatte 14 geringfügig weiter in Richtung auf die Schwungmassenanordnung zu und in Richtung vom Gehäuse 12 weg. Die Folge davon ist, dass durch Anstoßen des Kopfbereichs 62 des Mitnahmeelements 58 am Endbereich 64 des Anschlagelements 52 dieses Anschlagelement 52 aufgrund der unter der Kraftbeaufschlagung des Kraftspeichers 28 verschleißbedingt noch weiter anhaltenden Axialbewegung der Anpressplatte 14 das Anschlagelement 52 solange bezüglich des Gehäuses 12 axial verschiebt, bis die Anpressplatte 14 in ihrem Einrückzustand ist und keine weitere Axialbewegung bezüglich des Gehäuses 12 mehr erfolgt. Es liegt dann im Einrückzustand exakt wieder der in Fig. 4 erkennbare Zustand vor, bei welchem zwischen dem Endbereich 56 des Anschlagelements 52 und der Anpressplatte 14 das Lüftspiel L vorhanden ist, wobei nunmehr jedoch das Anschlagelement 52 ausgehend vom neuen bzw. vorherigen Zustand geringfügig axial verschoben ist.

Wird durch nachheriges ziehendes Angreifen am Kraftspeicher 28 wieder in den Ausrückzustand übergegangen, so folgt die Anpressplatte 14 zunächst unter der Einwirkung der Tangentialblattfedern 18 wieder der Ausrückbewegung des Kraftspeichers 28. Bevor jedoch der Kraftspeicher 28 an seinem durch den Verschleiß unbeeinflussten Ausrückwegbegrenzungsanschlag 66 in Anlage kommt, kontaktiert nunmehr die Anpressplatte 14 den Endbereich 56 des Anschlagelements 52 und kann der weiteren Ausrückbewegung des Kraftspeichers 28 nicht folgen. Die Folge davon ist, dass nunmehr die Anpressplatte 14 durch die Tangentialblattfedern 18 in Anlage gegen die Anschlagelemente 52 vorgespannt ist, während der Kraftspeicher 28 nunmehr seine Beaufschlagungswirkung durch weiteres Bewegung in Richtung Ausrücken aufhebt. Dies ist der Zustand, in dem nunmehr der Nachstellring 36 unter der Einwirkung der Vorspannfeder 28 in Umfangsrichtung sich verdrehen kann, wobei der Anlagebereich 42 aufgrund der bei Umfangsverdrehung auftretenden Axialverlagerung desselben weiterhin in Anlagekontakt am Kraftspeicher 28 bleiben kann. Die Verdrehung des Nachstellrings 36 dauert an, bis sich der Kraftspeicher 28 durch Anschlagen am Ausrückbewegungsanschlag 66 auch nicht mehr weiter bewegen kann. Auf diese Art und Weise ist der zuvor durch axiales Verschieben des Anschlagelements 52 bei Durchführung eines Einrückvorgangs erfasste Verschleiß kompensiert worden.

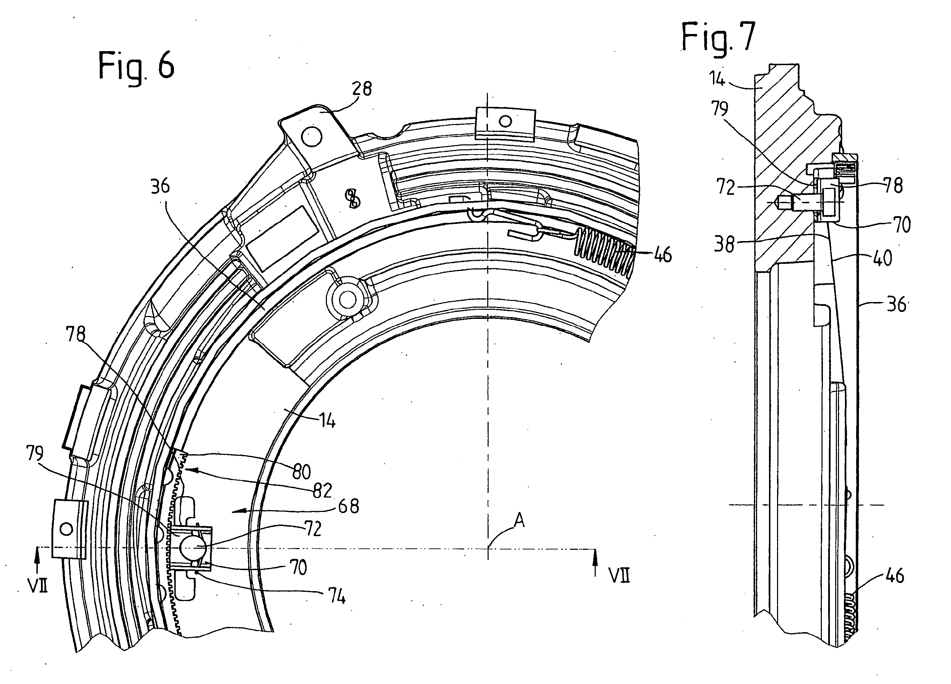

Aus der vorangehenden Erklärung erkennt man, dass Zustände auftreten, in welchen aufgrund der Tatsache, dass die Anpressplatte 14 noch nicht oder nicht vollständig im Einrückzustand ist und gegen die Reibbeläge einer Kupplungsscheibe o.dgl. presst, die Verschleißnachstellvorrichtung 34 alleine durch Einspannen des Nachstellrings 36 zwischen dem Kraftspeicher 28 und der Anpressplatte 14, also vor allem unter der Krafteinwirkung der Tangentialblattfedern 18, an der Durchführung eines Nachstellvorgangs verhindert ist. Treten in diesem Zustand Vibrationen oder Stöße auf, die ein axiales Schwingen oder Bewegen der Anpressplatte 14 nach sich ziehen, so kann durch die zumindest kurzzeitige Vergrößerung des Axialabstands zwischen der Anpressplatte und dem Kraftspeicher 28 entsprechend kurzzeitig die Nachstellbewegung 34 zur Durchführung von Nachstellvorgängen freigegeben werden, was eine fehlerhafte und undefinierte Verschleißkompensation nach sich ziehen würde. Um diesem Problem entgegenzutreten, ist bei der erfindungsgemäßen Druckplattenbaugruppe 10 einem den Fig. 6 und 7 erkennbare und allgemein mit 68 bezeichnete Blockieranordnung vorgesehen. Diese Blockieranordnung 68 umfasst in Zuordnung zu dem Nachstellring 36 zumindest ein Blockierelement 70. Dieses ist an einem an der Anpressplatte 14 vorgesehenen Bolzen 72 in Radialrichtung bezüglich der Drehachse A bewegbar geführt und durch eine sich am Bolzen 72 einerseits und am Blockierelement 70 andererseits abstützende Vorspannfeder 74 nach radial innen vorgespannt. Man erkennt, dass das Blockierelement 70 U-förmig ausgebildet sein kann, so dass die als Blattfeder o.dgl. ausgebildete Feder 74 sich an den U-Schenkeln 76, 78 abstützen kann, während in seinem Bodenbereich 79 das Verbindungselement 70 durch den Bolzen 72 zur Radialbewegung geführt ist.

An dem Nachstellring 36 ist entweder integral ausgebildet oder als separates Element 80 festgelegt eine Verzahnungsformation 82 vorgesehen. Diese Verzahnungsformation 82 ist in Umfangsrichtung, also auch der Nachstellbewegungsrichtung des Nachstellrings 36, langgestreckt und erstreckt sich im Bereich des Blockierelements 70. Die Teilung der Zähne 83 ist so, dass durch Radialverlagerung des Blockierelements 70 nach radial außen die U-Schenkel 78 in jeweils eine zwischen zwei Zähnen 83 gebildete Ausnehmung eintreten können. In diesem Zustand, in welchem das Blockierelement 70 also in die Verzahnungsformation 82 eingreift, ist aufgrund der Tatsache, dass das Blockierelement 70 sich in Umfangsrichtung nicht bewegen kann, auch der Nachstellring 36 zur Drehbewegung nicht freigegeben.

Die Funktionsweise dieser Blockieranordnung 68, die selbstverständlich mehrere über den Umfang verteilt liegende Blockierelemente 70 mit jeweils zugeordneter Verzahnungsformation 82 umfassen kann, wird nachfolgend beschrieben.

Solange die Druckplattenbaugruppe 10 sich nicht um die Drehachse A dreht, also beispielsweise ein Fahrzeug im abgestellten Zustand ist, ist das Blockierelement 70 nicht in Blockiereingriff mit der Verzahnungsformation 82, so dass grundsätzlich der Nachstellring 36 sich in der Nachstellrichtung drehen könnte. Im Drehbetrieb, also beispielsweise bei laufendem Antriebsaggregat, beispielsweise bereits dann, wenn das Antriebsaggregat mit Leerlaufdrehzahl dreht, reicht die vorhandene Fliehkraft aus, um dak Blockierelement 70 entgegen der Einwirkung der Feder 74 nach radial außen zu verlagern. Ist die Drehpositionierung des Nachstellrings 36 bzw. der Verzahnungsformation 82 in diesem Zustand so, dass das Blockierelement 70 mit seinen U-Schenkeln 76, 78 zwischen die Zähne 83 der Verzahnungsformation 82 eingreifen kann, so kann selbst dann, wenn nachfolgend Verschleiß auftritt und die vorangehend beschriebenen Bewegungszustände erlangt werden, der Nachstellring 36 sich nicht in Umfangsrichtung zur Durchführung einer Nachstellbewegung verdrehen, so dass eine Verschleißkompensation nicht stattfinden wird. Erst dann, wenn das System wieder abgestellt wird und beispielsweise durch Unterschreiten einer bestimmten Grenzdrehzahl, die unter der Leerlaufdrehzahl liegen kann, auch die Fliehkrafteinwirkung entsprechend abnimmt, bewegt sich das Blockierelement 70 wieder in den nicht in die Verzahnungsformation 82 eingreifenden Freigabezustand. Wird in diesem Zustand die Kupplung durch Betätigen eines Kupplungspedals oder eines Kupplungsstellglieds in Richtung Auskuppeln verstellt, so kann nunmehr der zuvor nicht kompensierte Verschleiß kompensiert werden, so wie vorangehend beschrieben.

Ist beim Übergang in den Drehzustand und beim Überschreiten einer bestimmten Schwellendrehzahl bzw. Schwellenfliehkraft die Umfangspositionierung der Verzahnungsformation 82 so, dass die U-Schenkel 76, 78 zumindest teilweise mit einem jeweiligen Zahn 83 überlappt sind, so kann das Blockierelement 70 sich nicht in den Eingriffszustand bewegen, obgleich es durch die Fliehkrafteinwirkung in dieser Richtung vorgespannt bzw. beaufschlagt ist. Erst dann, wenn entweder bei tatsächlichem Auftreten von Verschleiß oder bedingt durch eine kurzzeitige Anpressplattenaxialoszillation die Verschleißnachstellvorrichtung 34 bzw. der Nachstellring 36 in der vorangehend beschriebenen Art und Weise eine Nachstellbewegung durchführen kann, wird die Verzahnungsformation 82 sich in Umfangsrichtung bewegen, und zwar so weit, bis das nach radial außen vorgespannte Blockierelement 70 nunmehr mit seinen U-Schenkeln 76, 78 in die nächstfolgende Aussparung zwischen zwei Zähnen 83 eingreift. War diese Umfangsbewegung des Nachstellrings 36 induziert durch einen aufgetretenen Verschleiß, so ist dieser nunmehr zumindest teilweise kompensiert worden. Nach erneutem Abstellen und wieder Starten des Systems kann aufgrund der Tatsache, dass der Nachstellring 36 sich dann nicht weiter verdreht haben wird, das Blockierelement 70 sofort in Eingriff mit der Verzahnungsformation 82 treten und nunmehr den Nachstellring 36 wieder solange gegen Drehung sichern, bis das System wieder abgestellt wird.

War die Umfangsbewegung des Nachstellrings 36 nicht durch aufgetretenen Verschleiß induziert bzw. ermöglicht, sondern durch eine Axialoszillation der Anpressplatte 14, so ist die aufgetretene Umfangsbewegung des Nachstellrings 36 tatsächlich als Überkompensation zu betrachten, welche gleichwohl im Sinne der vorliegenden Erfindung als definierte Verschleißkompensation zu betrachten ist, da das Ausmaß dieser Verschleißkompensation durch das Beschränken derselben auf eine definierte Nachstellbewegung des Nachstellrings 36 in einem bestimmten Bereich bekannt ist. Die Folge davon ist, dass beim nächsten Ausrückzustand bei betriebenem System die Anpressplatte dann, wenn der Kraftspeicher 28 in Anlage am Anschlag 66 kommt, auch einen der Überkompensation entsprechenden Abstand zum Endbereich 56 des Anschlagelements 52 haben wird. Erst dann, wenn im nachfolgenden Betrieb zunehmend Verschleiß auftritt, wird das Anschlagelement 52, so wie vorangehend beschrieben, sich sukzessive axial verlagern, bis wieder der Zustand auftritt, in welchem die Anpressplatte 14 dann in Anlage an den Endbereich 56 kommt, wenn auch der Kraftspeicher 28 in Anlage an den Anschlag 66 kommt. Bei weiter auftretendem Verschleiß verlagert sich dann das Anschlagelement 52 weiter in axialer Richtung, wobei jedoch eine Verschleißkompensation zunächst nicht möglich ist, da fliehkraftbedingt das Blockierelement 70 in Eingriff mit der Verzahnungsformation 82 steht. Bevor ein derartiger an sich eine Verschleißkompensation erfordernder Verschleißzustand vorhanden ist, wird jedes Mal dann, wenn das System abgestellt wird und das Blockierelement 70 aufgrund mangelnder Fliehkraftbeaufschlagung wieder außer Blockiereingriff mit der Verzahnungsformation 82 tritt und dann bei erneutem Anlassen bzw. Starten des Systems das Blockierelement 70 wieder nach radial außen beaufschlagt wird, dieses aufgrund noch nicht aufgetretener Umfangsbewegung des Nachstellrings 36 sofort wieder in Eingriff mit der Verzahnungsformation 82 treten. Liegt ein Verschleißzustand vor, der die Verschleißkompensation erfordert, so wird diese Verschleißkompensation dann auftreten, wenn beim Übergang des Systems in den Stillstandzustand oder bei Unterschreiten der Grenzdrehzahl und beim Ausrücken der Reibungskupplung der Nachstellring 36 zur Nachstellbewegung freigegeben ist.

Aus der vorangehenden Beschreibung erkennt man, dass durch das erfindungsgemäße Vorsehen der Blockieranordnung 68 dafür gesorgt ist, dass die Verschleißnachstellvorrichtung 36 einen Verschleiß entweder nur dann kompensieren kann, wenn das Auftreten undefinierter Zustände nicht zu erwarten ist, nämlich dann, wenn das Gesamtsystem praktisch im Stillstandzustand ist, oder der Verschleißnachstellvorrichtung 34 die Verschleißnachstellung nur in einem definierten Ausmaß ermöglicht wird, das eine bestimmte Überkompensation, gleichwohl in definiertem Ausmaß, mit sich bringen kann. Im nachfolgenden Kupplungsbetrieb wird dieses Ausmaß an Verschleißüberkompensation dann wieder "aufgebraucht", bis erneut ein Verschleißkompensationsvorgang durchgeführt werden kann.

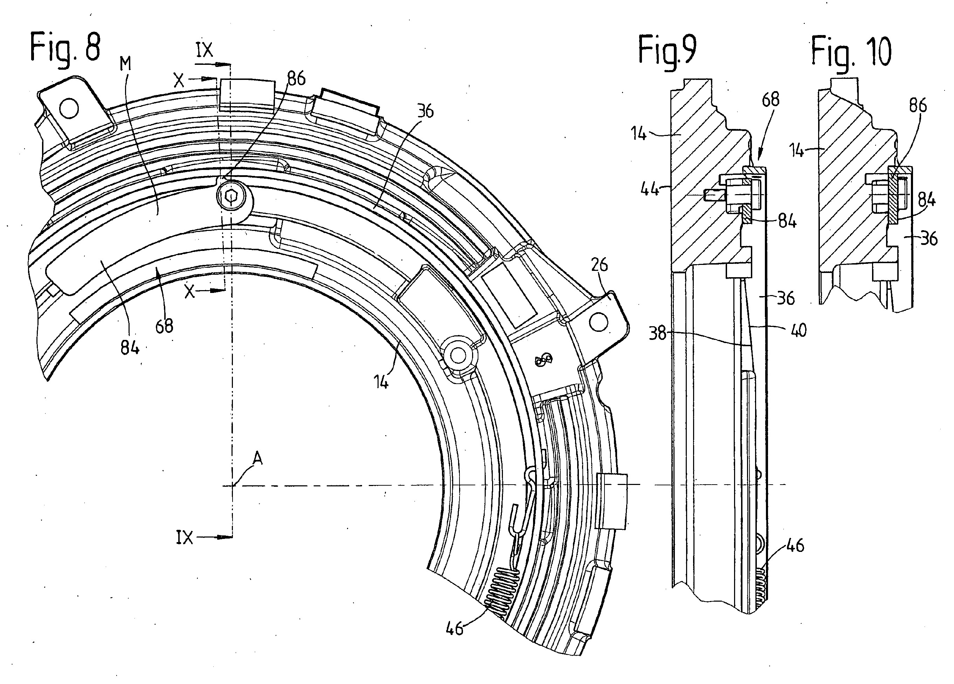

Eine alternative Ausgestaltungsform der Blockieranordnung 68 ist in den Fig. 8 - 10 gezeigt. Man erkennt, dass diese Blockieranordnung 68 ein im Wesentlichen in Umfangsrichtung sich erstreckendes Blockierhebelelement 84 umfasst. Dieses ist an einem Endbereich einer Anpressplatte 14 schwenkbar getragen, und zwar schwenkbar um eine zur Drehachse A im Wesentlichen parallele Achse. Durch den Umfangsversatz des Massenschwerpunkts M dieses Blockierhebelelements 84 bezüglich der Schwenkanbindung desselben an die Anpressplatte 14 ist im Drehbetrieb dieses Blockierhebelelement 84 nach radial außen vorgespannt, so dass es die Tendenz hat, sich an den Innenumfangsbereich des Nachstellrings 36 anzulegen. In Umfangsabstand zur Schwenkanbindung an die Anpressplatte 14 weist das Blockierhebelelement 84 einen Blockiernocken 86 auf, der bei Fliehkraftbeaufschlagung nach radial außen gegen den Innenumfangsbereich des Nachstellrings 36 presst. Auf diese Art und Weise wird ebenfalls eine Wirkung erlangt, die bei vorhandener Fliehkraftbeaufschlagung dafür sorgt, dass der Nachstellring 36 sich nicht drehen kann. Hier kann durch die Formgebung und die Masseverteilung des Blockierhebelelements 84 dafür gesorgt werden, dass auch dann, wenn eine bestimmte Grenzdrehzahl überschritten wird, die zwischen dem Blockiernocken 86 und dem Nachstellring 36 vorhandene Reibwechselwirkung so groß ist, dass die Vorspannkraft der Vorspannfeder nicht ausreicht, um den Nachstellring 36 zu verdrehen.

Selbstverständlich ist es auch bei dieser Ausgestaltungsform möglich, am Nachstellring 36 eine Verzahnungsformation vorzusehen, in welche der Blockiernocken 86 dann eingreifen kann, so dass sich im Wesentlichen die gleiche Funktionsweise ergibt, wie vorangehend beschrieben, bei welcher entweder bei vorhandener Ausrichtung mit einer Aussparung zwischen zwei Zähnen unmittelbar der Nachstellring 36 blockiert wird und erst beim Übergang in einen Stillstandzustand wieder ein Verschleißnachstellvorgang durchgeführt werden kann, oder bei nicht vorhandener Ausrichtung zwar ein Nachstellvorgang auftreten kann, wobei jedoch nach zwangsweise erlangter Ausrichtung eine weitergehende Nachstellung erst dann definiert erfolgen kann, wenn erneut Verschleiß aufgetreten ist. Umgekehrt ist es selbstverständlich bei der in den Fig. 6 und 7 dargestellten Ausgestaltungsform möglich, die Wechselwirkung zwischen dem Blockierelement 70 und dem Nachstellring 36 durch Reibung und nicht durch Formschluss bereitzustellen, so dass sich ein kontinuierlicher, ungestufter Nachstellprozess einstellen wird.

Es sei darauf hingewiesen, dass selbstverständlich an der erfindungsgemäßen Druckplattenbaugruppe verschiedene Änderungen vorgenommen werden können. So können beispielsweise im Bereich der Verschleißnachstellvorrichtung zwei Nachstellringe vorgesehen sein, von welchen einer an der Anpressplatte abgestützt ist und der andere durch den Kraftspeicher beaufschlagt wird, wobei diese beiden Nachstellringe dann die komplementären Schrägflächen bzw. Rampenflächen aufweisen. Weiterhin ist es selbstverständlich möglich, dass anstelle des Kraftspeichers als Kraftbeaufschlagungsanordnung eine Kraftübertragungshebelanordnung o.dgl. vorgesehen sein kann, die an sich selbst keinen eigenen Kraftbeitrag liefert und insofern durch ein Betätigungssystem zur Erzeugung einer Einrückkraft beaufschlagt wird.

## Patentansprüche

1. Druckplattenbaugruppe, umfassend ein Gehäuse (12), eine in dem Gehäuse (12) angeordnete und durch eine Kopplungsanordnung (16) mit diesem zur gemeinsamen Drehung um eine Drehachse (A), in Richtung der Drehachse (A) bewegbar gekoppelte Anpressplatte (14), eine bezüglich des Gehäuses (12) und der Anpressplatte (14) abgestützte Kraftbeaufschlagungsanordnung (28), durch welche die Anpressplatte (14) zur Erlangung eines Einrückzustandes beaufschlagbar ist, eine Verschleißnachstellvorrichtung (34) mit wenigstens einem Nachstellelement (36), das zur Durchführung eines Nachstellvorgangs unter der Vorspannung einer Vorspannanordnung (46) steht,
**dadurch gekennzeichnet, dass** eine Blockieranordnung (68) vorgesehen ist, welche auf das Nachstellelement (36) einwirken kann, wobei die Blockieranordnung (68) das Nachstellelement in Abhängigkeit von einer Fliehkrafteinwirkung zur Durchführung eines Nachstellvorgangs freigibt oder eine Nachstellbewegung des Nachstellelements (36) auf ein vorbestimmtes Ausmaß beschränkt oder vollständig unterbindet.

2. Druckplattenbaugruppe nach Anspruch 1,
**dadurch gekennzeichnet, dass** dann, wenn eine auf die Blockieranordnung (68) bei Drehung der Druckplattenbaugruppe (10) einwirkende Fliehkraft eine vorbestimmte Größe übersteigt, die Blockieranordnung (68) das Nachstellelement (36) gegen Durchführung eines Nachstellvorgangs im Wesentlichen blockiert oder dem Nachstellelement (36) eine Nachstellbewegung in dem vorbestimmten Ausmaß ermöglicht.

3. Druckplattenbaugruppe nach Anspruch 1 oder 2,
**dadurch gekennzeichnet, dass** die Blockieranordnung (68) wenigstens ein Blockierelement (70; 84) umfasst, das durch Fliehkrafteinwirkung in Blockierwechselwirkung mit dem Nachstellelement (36) bringbar ist und durch Rückstellkrafteinwirkung außer Blockierwechselwirkung mit dem Nachstellelement (36) bringbar ist.

4. Druckplattenbaugruppe nach Anspruch 3,
**dadurch gekennzeichnet, dass** die Rückstellkrafteinwirkung durch eine auf das Blockierelement (70) einwirkende Rückstellfeder (74) bereitgestellt ist.

5. Druckplattenbaugruppe nach Anspruch 3 oder 4,
**dadurch gekennzeichnet, dass** die Rückstellkrafteinwirkung durch Schwerkrafteinwirkung bereitgestellt ist.

6. Druckplattenbaugruppe nach einem der Ansprüche 3 bis 5,
**dadurch gekennzeichnet, dass** an dem Nachstellelement (36) oder dem wenigstens einen Blockierelement (70) eine in einer Nachstellrichtung des Nachstellelements (36) sich erstreckende Verzahnungsformation (82) vorgesehen ist, mit welcher das jeweils andere Element zur Herstellung des Blockierzustandes gegebenenfalls nach Bewegung des Nachstellelements (36) in der Nachstellrichtung in Blockiereingriff bringbar ist.

7. Druckplattenbaugruppe nach einem der Ansprüche 1 bis 6,
**dadurch gekennzeichnet, dass** eine Lüftwegbegrenzungsanordnung (50) vorgesehen ist, durch welche bei Durchführung eines Ausrückvorgangs eine Lüftbewegung der Anpressplatte (14) begrenzbar ist, wobei die Lüftwegbegrenzungsanordnung (50) für die Anpressplatte (14) einen von einem Verschleißzustand im Wesentlichen unabhängigen Lüftweg (L) zulässt.

8. Druckplattenbaugruppe nach Anspruch 7,
**dadurch gekennzeichnet, dass** die Lüftwegbegrenzungsanordnung (50) ein an dem Gehäuse (12) getragenes und durch Krafteinwirkung bezüglich des Gehäuses (12) verlagerbares Anschlagelement (52) sowie ein mit der Anpressplatte (14) fest gekoppeltes und bei Auftreten von Verschleiß das Anschlagelement (52) bezüglich des Gehäuses (12) verlagerndes Mitnahmeelement (58) aufweist.

9. Druckplattenbaugruppe nach einem der Ansprüche 1 bis 8,
**dadurch gekennzeichnet, dass** eine Lüftkrafterzeugungsanordnung (16) vorgesehen ist, durch welche die Anpressplatte (14) mit einer der Beaufschlagungswirkung der Kraftbeaufschlagungsanordnung (28) entgegen wirkenden Lüftkraft beaufschlagt ist.

10. Druckplattenbaugruppe nach Anspruch 9,
**dadurch gekennzeichnet, dass** die Kopplungsanordnung (16) die Lüftkrafterzeugungsanordnung (16) bildet.

11. Druckplattenbaugruppe nach Anspruch 9 oder 10,
**dadurch gekennzeichnet, dass** die durch die Vorspannanordnung (48) bereitgestellte Vorspannwirkung nicht ausreicht, um das Nachstellelement (36) bei vorhandener Lüftkrafteinwirkung und Beaufschlagungswirkung durch die Kraftbeaufschlagungsanordnung (28) zur Durchführung eines Nachstellvorgangs zu bewegen.

12. Druckplattenbaugruppe nach einem der Ansprüche 1 bis 11,
**dadurch gekennzeichnet, dass** eine Ausrückwegbegrenzungsanordnung (66) für die Kraftbeaufschlagungsanordnung (28) vorgesehen ist zum Begrenzen von deren Bewegung bei Durchführung eines Ausrückvorgangs.

13. Druckplattenbaugruppe nach Anspruch 12,
**dadurch gekennzeichnet, dass** die Ausrückwegbegrenzungsanordnung (66) durch das Gehäuse (12) gebildet ist.
